## Europäisches Patentamt

## European Patent Office

## Office européen des brevets

(11) Veröffentlichungsnummer: **0 116 899**

**A2**

# EUROPÄISCHE PATENTANMELDUNG

(21) Anmeldenummer: **84101307.1**

(22) Anmeldetag: **08.02.84**

(51) Int. Cl.³: **F 24 D 3/00**

(30) Priorität: **21.02.83 DE 3305929**

(43) Veröffentlichungstag der Anmeldung:
**29.08.84** Patentblatt **84/35**

(84) Benannte Vertragsstaaten:
**AT BE CH DE FR GB IT LI**

(71) Anmelder: **SIEMENS AKTIENGESELLSCHAFT**
**Berlin und München Wittelsbacherplatz 2**
**D-8000 München 2(DE)**

(72) Erfinder: **Müller, Heinz, Dr., Dipl.-Ing.**
**Falkenstrasse 40**
**D-8520 Erlangen(DE)**

(72) Erfinder: **Zaugg, Johannes, Dipl.-Ing.**
**Rüttmannsdorfer Strasse 6**
**D-8633 Rödental(DE)**

(54) Zentralheizungseinrichtung.

(57) Bei einer Zentralheizungseinrichtung ist ein Gas- oder Öl gefeuerter Heizkessel (1) vorgesehen. Dieser ist in einem gemeinsamen Gehäuse (3) mit einer als Luft-/ Wasser-Wärmepumpe (2) ausgebildeten Kompressionskältemaschine und einem Brauchwasserspeicher (4) vereinigt. Von der Wärmepumpe (2) sind im gemeinsamen Gehäuse (3) lediglich der Verdichter, der Verflüssiger sowie Steuer- und Regeleinrichtungen angeordnet. Der Kältemittelkreislauf ist in Strömungsrichtung des Kältemittels vor dem Verdichter und hinter dem Verflüssiger aufgetrennt. Jede Trennstelle ist als lösbare Anschlußstelle ausgebildet. Durch die Anordnung kann der Verdampfer der Wärmepumpe an beliebiger Stelle in- oder außerhalb eines Ausstellungsraumes der Zentralheizungseinrichtung aufgestellt werden. Es ist lediglich eine Verbindung zu den Anschlußstellen herzustellen.

SIEMENS AKTIENGESELLSCHAFT       Unser Zeichen
Berlin und München               VPA 83 P 8 5 0 9 E

## Zentralheizungseinrichtung

Die Erfindung bezieht sich auf eine Zentralheizungseinrichtung nach dem Oberbegriff des Patentanspruches.

Es ist bereits eine Zentralheizungseinrichtung der im Oberbegriff des Patentanspruches genannten Art bekannt, bei welcher sich bei ihrer Aufstellung, beispielsweise in einem Kellerraum, zwei divergierende Forderungen gegenüberstehen. Einerseits sollte die Aufstellung möglichst nahe dem für den Heizkessel erforderlichen Kamin vorgenommen werden, um ein Verbindungsrohr vom Heizkessel zum Kamin so kurz als möglich zu halten. Diese Aufstellung ist auch für den Fall günstig, bei dem der Kamin für die Aufnahme der über den Verflüssiger der Wärmepumpe gehenden Abluft ausgelegt ist. Denn auch hier könnte ein entsprechender Abluftkanal so kurz als möglich gehalten werden. Andererseits sollte die Aufstellung möglichst in der Nähe eines Kellerfensters vorgenommen werden, um den Weg der Zuluft zum Verdampfer der Wärmepumpe so kurz als möglich zu halten, unabhängig davon, ob für die Zuluft ein eigener Kanal verwendet wird oder nicht.

Der Erfindung liegt die Aufgabe zu Grunde, die Zentralheizungseinrichtung der im Oberbegriff des Patentanspruches genannten Art so auszubilden, daß eine weitgehend freizügige Aufstellung am Bestimmungsort möglich ist.

Bec 25 Bes / o7.o2.1983

Die gestellte Aufgabe wird erfindungsgemäß durch die im kennzeichnenden Teil des Patentanspruches angegebene Ausbildung gelöst.

Durch die gefundene Lösung ist es möglich, den Verdampfer der Wärmepumpe an beliebiger Stelle des Kellerraumes, in dem sich die Zentralheizungseinrichtung befindet, in einem anderen Kellerraum, generell in einen anderen Raum oder gar im Freien aufzustellen. Gleich wo sich nunmehr der Verdampfer befindet, es muß lediglich von den Anschlußstellen des aufgetrennten Kältemittelkreislaufes eine Hin- und eine Rückleitung zum Verdampfer verlegt werden, welche Leitungen zweckmäßig wärmeisoliert werden sollten. Die zu verlegenden Leitungen nehmen nur einen geringen Raum in Anspruch, nicht sehr viel mehr als eine übliche Wasserleitung vom Hausanschluß zu einer Zapfstelle. Im Vergleich zu einem Luftzuführungskanal ist ein solcher Platzbedarf vernachlässigbar klein.

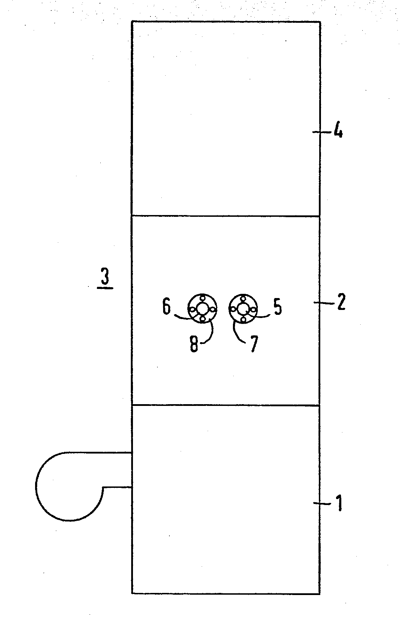

Ein Ausführungsbeispiel der Erfindung ist in der Zeichnung rein schematisch dargestellt, die eine Seitenansicht einer Zentralheizungseinrichtung zeigt.

In der Zeichnung ist mit 1 ein Gas- oder Öl gefeuerter Heizkessel bezeichnet.

Der Heizkessel 1 ist mit einer als Luft-/Wasserwärmepumpe 2 ausgebildeten Kompressionskältemaschine in einem insgesamt mit 3 bezeichneten Gehäuse vereinigt, das dem Heizkessel 1 und der Kompressionskältemaschine gemeinsam ist und im dargestellten Beispiel noch einen Brauchwasserspeicher 4 umfaßt.

0116899

In dem gemeinsamen Gehäuse 3 sind von der Wärmepumpe 2 lediglich der Verdichter, der Verflüssiger, sowie Steuer- und Regeleinrichtungen angeordnet. Alle diese Aggregate und Einrichtungen sind nicht dargestellt, sie befinden sich in dem mit 2 bezeichneten Gehäuseteil.

Neben dem Verdampfer der Wärmepumpe 2 befindet sich auch die Expansionseinrichtung außerhalb des gemeinsamen Gehäuses 3.

Wesentlich ist jedoch, daß der den Verdichter und den Verflüssiger verbindende Kältemittelkreislauf der Kompressionskältemaschine in Strömungsrichtung des Kältemittels vor dem Verdichter und hinter dem Verflüssiger aufgetrennt ist und daß jede Trennstelle, in der Zeichnung mit 5,6 bezeichnet, als lösbare Anschlußstelle für nicht dargestellte Verbindungsleitungen zu dem ebenfalls nicht dargestellten Verdampfer der Wärmepumpe 2 ausgebildet ist, wie durch Flansche 7,8 angedeutet.

1 Patentanspruch
1 Figur

Patentanspruch

Zentralheizungseinrichtung, mit einem Gas- oder Öl gefeuerten Heizkessel (1), der in einem gemeinsamen Gehäuse (3) mit einer als Luft-/ Wasser-Wärmepumpe (2) ausgebildeten Kompressionskältemaschine vereinigt ist, d a d u r c h  g e -k e n n z e i c h n e t, daß von der Wärmepumpe (2) im gemeinsamen Gehäuse (3) lediglich der Verdichter, der Verflüssiger sowie Steuer- und Regeleinrichtungen angeordnet sind und der Kältemittelkreislauf der Wärmepumpe (2) in Strömungsrichtung des Kältemittels vor dem Verdichter und hinter dem Verflüssiger aufgetrennt sowie jeder der Trennstellen (7,8) als lösbare Anschlußstelle ausgebildet ist.